# EUROPÄISCHE PATENTSCHRIFT

(11) **EP 0 637 276 B1**
(45) Veröffentlichungstag und Bekanntmachung des Hinweises auf die Patenterteilung: **03.02.1999**
(21) Anmeldenummer: 93924557.7
(22) Anmeldetag: 30.10.1993
(51) Int. Cl.: B23Q 3/00, B27C 5/06, B23Q 1/28

(54) **ANDRUCKVORRICHTUNG FÜR HOLZFRÄSMASCHINEN**
PRESSURE DEVICE FOR TIMBER CUTTING MACHINES
DISPOSITIF DE PRESSION POUR MACHINES A FRAISER LE BOIS

(30) Priorität: 20.02.1993 DE 4305356
(43) Veröffentlichungstag der Anmeldung: 08.02.1995
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.
(86) Internationale Anmeldenummer: EP9303034
(87) Internationale Veröffentlichungsnummer: WO9419148

(56) Entgegenhaltungen:
- EP-A- 0 095 733
- CH-A- 354 928
- DE-A- 3 317 270
- DE-B- 1 035 349
- DE-U- 9 003 963
- FR-A- 574 780
- US-A- 4 531 438
- US-A- 4 715 089

## Beschreibung

Die Erfindung betrifft eine Andruckvorrichtung für Holzfräsmaschinen mit einem an einem Lagerbock angebrachten, um eine horizontale Achse schwenkbaren Arm, der einen vertikal und horizontal verstellbaren, auf die Oberseite des Werkstücks wirkenden Druckschuh und ein das Werkstück in horizontaler Richtung gegen einen Anschlag drückendes, vertikal verstellbares Führungsorgan trägt, das um eine vertikale Achse schwenkbar ist.

Derartige Andruckvorrichtungen sind beispielsweise bekannt aus dem Prospekt der Schweizerischen Unfallversicherungsanstalt "SUVA Kehlschutzapparat" vom Februar 1966. Dabei sind sowohl das Führungsorgan als auch der Druckschuh an Führungsstangen befestigt, die in vertikaler Richtung in Lagerblöcken verschiebbar sind, welche an einem Träger gehalten sind. Zur Blockierung der eingestellten Vertikalposition des Druckschuhs und des Führungsorgans dienen Klemmschrauben, die in den jeweiligen Lagerblock eingeschraubt sind und gegen an dem Träger befestigte Stangen wirken. Zusätzlich sind Klemmschrauben vorgesehen, mit denen die in Längsrichtung des Trägers gewählte Position der Stangen fixiert werden kann. Zur Einstellung der Winkelposition des Führungsorgans ist eine weitere Klemmschraube vorgesehen, über welche die Stangen an dem Träger befestigt sind, wodurch eine Winkelverstellung des Führungsorgans auch eine Verdrehung des Druckschuhs zur Folge hat.

Eine ähnliche Andruckvorrichtung ist Gegenstand der DE-B 1 035 349 die als nächstliegender Stand der Technik angesehen wird. Bei dieser besteht der Träger aus zwei übereinander angeordneten Führungsstangen, die in Längsrichtung verschiebbar zwischen Prismenscheiben gelagert sind, welche ihrerseits um Zapfen gekippt werden können. Damit steht ein zwar in weiten Grenzen vielfach verstellbarer Träger zur Verfügung, der jedoch den Nachteil einer verhältnismäßig instabilen Anlenkung am Lagerbock hat. Die beiden vom Lagerbock wegweisenden Enden der Stangen sind durch ein Aufnahmestück miteinander verbunden, in welchem die Druckstange eines Druckschuhs vertikal verstellbar gelagert ist. Zur Einstellung der Höhenlage dient ein Klemmhebel des Aufnahmestücks. An diesem sind ferner seitlich zwei weitere Klemmhebel angebracht, die zur Feststellung von zwei horizontalen Stangen dienen, deren Enden durch eine Gabel miteinander verbunden sind, in der eine weitere Druckstange höhenverstellbar gelagert ist, deren unteres Ende ein Seitendruckholz trägt. Zum Feststellen der Druckstange des Seitendruckholzes dient ein weiterer Klemmhebel, der in die Gabel eingeschraubt ist. Damit ist an den freien Enden der beiden Tragstangen eine verhältnismäßige komplizierte Tragkonstruktion angebracht, die eine Vielzahl von Klemmhebeln aufweist, um den Druckschuh und das Andruckholz einstellen zu können. Auch die Längseinstellung des aus den beiden Tragstangen bestehenden Trägers ist verhältnismäßig instabil und muß im Bereich des Lagerbocks vorgenommen werden.

Der Erfindung liegt die Aufgabe zugrunde, eine Andruckvorrichtung für Holzfräsmaschinen zur Verfügung zu stellen, die gegenüber dem geschilderten Stand der Technik einen erheblich einfacheren Aufbau aufweist und mit wesentlich weniger Klemmorganen auskommt.

Bei einer Andruckvorrichtung der eingangs umrissenen Bauart wird diese Aufgabe erfindungsgemäß dadurch gelöst, daß der Arm als eine Stange ausgebildet ist, die in einem am Lagerbock schwenkbar angelenkten Zylinder längsverschieblich gelagert ist und auf die sowohl der Druckschuh als auch das Führungsorgan aufgesetzt sind, wobei zur Arretierung der in ihrer Längsrichtung eingestellten Stange und/oder des in vertikaler und horizontaler Richtung eingestellten Druckschuhs und/oder des in vertikaler Richtung eingestellten und geschwenkten Führungsorgans jeweils ein auf ein Außengewinde aufgeschraubter Klemmring vorgesehen ist, der koaxial auf der Stange sitzt.

Mit der Erfindung steht eine wesentlich übersichtlichere Vorrichtung zur Verfügung, deren erheblich einfacherer Aufbau eine vereinfachte Montage und leichtere Bedienung ermöglicht. Wesentlich ist dabei, daß für jedes einstellbare Bauteil der Andruckvorrichtung - Stange, Druckschuh und Führungsorgan - jeweils nur ein einziger Klemmring genügt, um die notwendigen Einstellungen und Arretierungen vornehmen zu können, während bei den bekannten Andruckvorrichtungen eine große Anzahl von Klemmschrauben notwendig ist, die jeweils nur eine Funktion haben und höheren Bedienungsaufwand erfordern.

In weiterer Ausgestaltung der Erfindung ist der Druckschuh und/oder das Führungsorgan am unteren Ende eines rechteckigen Rahmens angebracht, der zwischen zwei vertikalen, in Längsrichtung der Stange gegeneinander verschieblichen Führungsplatten höhenverstellbar gelagert und mittels des Klemmringes einklemmbar ist.

Um den Druckschuh in Längsrichtung der Stange und/oder die Stange in ihrer Längsrichtung arretieren zu können, sind nach einem weiteren Merkmal der Erfindung Keilelemente vorgesehen, die in radiale Ausnehmungen einer auf die Stange koaxial aufgesetzten, das Außengewinde tragenden Gewindebuchse eingesetzt sind und mittels des Klemmringes an jeweils einer schrägen Führungsfläche radial gegen die Außenseite der Stange verschoben werden können.

Es ist besonders vorteilhaft, wenn der Druckschuh gegen eine Federkraft vertikal nach oben verschiebbar an seinem Rahmen gelagert ist, so daß er selbst nicht elastisch ausgebildet sein muß und trotzdem immer die notwendige Druckkraft auf das Werkstück ausübt.

Nach einem anderen Merkmal der Erfindung sind die beiden Führungsplatten zur Höhenarretierung des Rahmens des Führungsorgans auf einen am freien Ende der Stange um eine vertikale Achse schwenkbar gelagerten Zapfen aufgesetzt, dessen freies Ende das Außengewinde für den Klemmring trägt. Dabei kann der vorzugsweise einen quadratischen Querschnitt aufweisende Zapfen an seinem vom Außengewinde abgewandten Ende als Gabel ausgebildet sein, die auf das freie, abgeflachte Ende der Stange um einen Drehzapfen schwenkbar aufgesetzt ist. Um die jeweilige Winkelstellung des Rahmens des Führungsorgans arretieren zu können, hat das abgeflachte Ende der Stange eine kreisbogenförmige Stirnseite mit Rastausnehmungen, in die ein in die Gabel eingesetztes Rastelement eingreift, das bei festgeschraubtem Klemmring über die beiden Führungsplatten gegen die kreisbogenförmige Stirnseite der Stange gedrückt wird.

Weitere Merkmale und Vorteile der Erfindung ergeben sich aus den Patentansprüchen. In der folgenden Beschreibung ist ein Ausführungsbeispiel erläutert, das in der Zeichnung dargestellt ist.
Es zeigen:
Figur 1 die Ansicht einer Andruckvorrichtung im Einsatz an einer Holzfräsmaschine,
Figur 2 einen Längsschnitt durch den am Lagerbock schwenkbar angelenkten Zylinder mit dem darin längsverschieblichen Arm und dem zugehörigen Klemmring,
Figur 3 einen Querschnitt in der Ebene III-III der Figur 2,
Figur 4 einen Vertikalschnitt durch den Druckschuh mit zugehörigem Rahmen und Klemmring,
Figur 5 einen Horizontalschnitt durch den Rahmen des Führungsorgans mit zugehörigem Klemmring,
Figur 6 eine der Figur 5 entsprechende Schnittdarstellung während des Schwenkens des Rahmens des Führungsorgans,
Figur 7 einen Vertikalschnitt durch den Rahmen des Führungsorgans und
Figur 8 einen Schnitt in der Ebene VIII-VIII der Figur 7.

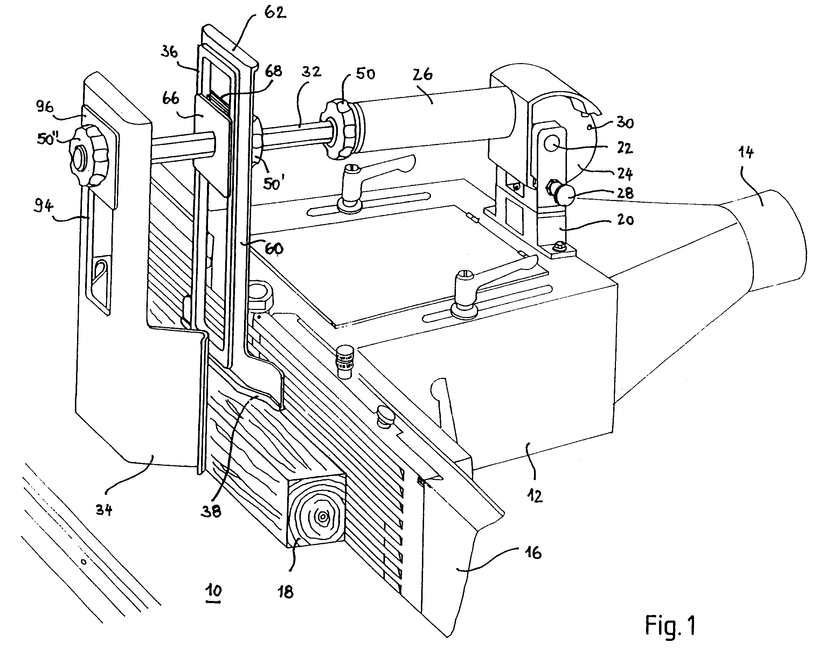

In Figur 1 ist ein auf einem Maschinentisch 10 einer Holzfräsmaschine befestigtes Gehäuse 12 angedeutet, das über einen Rohrstutzen 14 an eine Absaugeinrichtung angeschlossen werden kann und die nicht dargestellten Frässpindel abdeckt. An der Vorderseite des Gehäuses 12 ist ein Anschlag 16 zur Führung eines zu fräsenden Werkstücks 18 angebracht.

Auf der Oberseite des Gehäuses 12 ist ein Lagerbock 20 befestigt, in dem über einen horizontalen Drehzapfen 22 ein Lagerschild 24 schwenkbar gelagert ist, von dem ein Zylinder 26 absteht, der in der in Figur 1 eingezeichneten Betriebsstellung der Andruckvorrichtung waagrecht verläuft. Über das Lagerschild 24 kann der Zylinder 26 um seinen Drehzapfen 22 nach oben geschwenkt werden, so daß die Andruckvorrichtung aus dem Arbeitsbereich herausgeschwenkt wird. Um die Andruckvorrichtung in dieser Stellung und in der waagrechten Betriebsstellung arretieren zu können, ist ein Verriegelungsknopf 28 vorgesehen, dessen vorderes Ende in eine entsprechende Rastbohrung 30 des Lagerschildes 24 eingedrückt werden kann.

In dem Zylinder 26 ist ein im Querschnitt sechseckiger Arm 32 in seiner Längsrichtung verschiebbar gelagert. Dieser Arm 32 trägt an seinem vorderen Ende ein in bekannter Weise federnd ausgebildetes Führungsorgan 34, das das Werkstück 18 in horizontaler Richtung gegen den Anschlag 16 drückt. Ferner ist auf dem Arm 32 ein höhenverstellbarer, rechteckiger Rahmen 36 gelagert, der an seinem unteren Ende einen Druckschuh 38 trägt, der auf die Oberseite des Werkstücks 18 wirkt und dieses dabei in fester Anlage gegen den Maschinentisch 10 drückt.

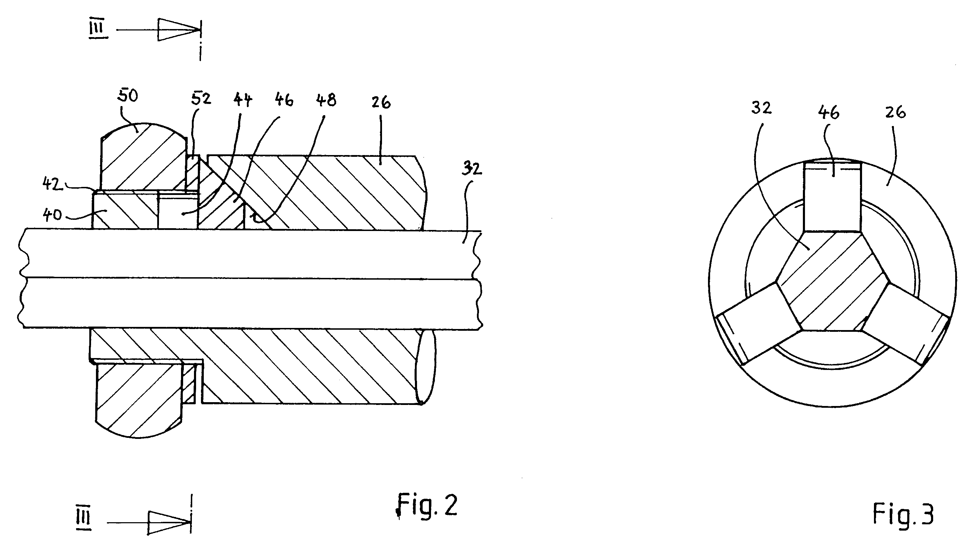

Wie die Figuren 2 und 3 zeigen, ist das vom Lagerbock 20 abgewandte Ende des Zylinders 26 als Gewindebuchse 40 mit Außengewinde 42 ausgebildet. In die Gewindebuchse 40 sind drei gleichmäßig über den Umfang verteilte, radiale Ausnehmungen 44 eingearbeitet, von denen jede ein Keilelement 46 aufnimmt. Die Keilfläche jedes Keilelementes 46 liegt an einer schrägen Führungsfläche 48 an, die am inneren Ende jeder Ausnehmung 44 am Zylinder 26 ausgebildet ist. Auf das Außengewinde 42 der Gewindebuchse 40 ist ein Klemmring 50 aufgeschraubt, der über eine Ringscheibe 52 gleichmäßig auf die drei Keilelemente 46 drückt. Wenn der Klemmring 50 festgezogen wird, drückt er die Keilelemente 46 in axialer Richtung gegen die schrägen Führungsflächen 48, wodurch die Keilelemente 46 in radialer Richtung gegen die entsprechenden Außenflächen des Armes 32 gedrückt werden. Auf diese Weise wird der Arm 32 in seiner gewählten Stellung innerhalb des Zylinders 26 festgeklemmt.

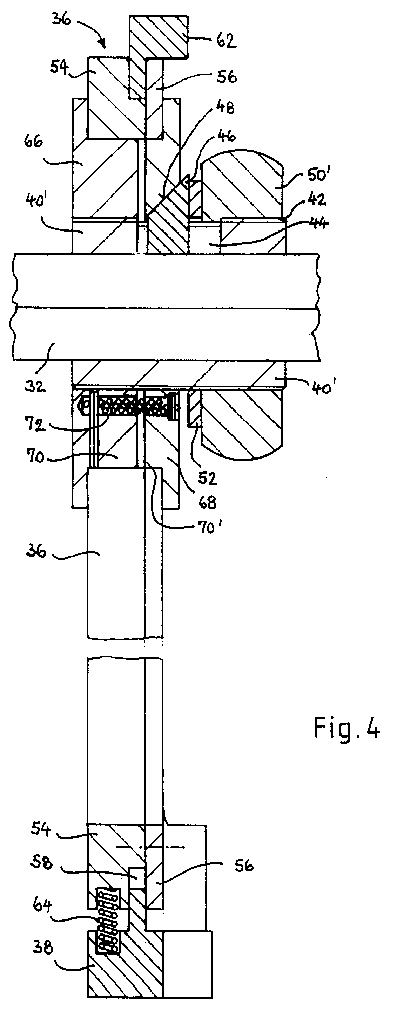

Figur 4 zeigt einen Vertikalschnitt durch den die Figur 1 dargestellten Rahmen 36, der aus einem vorderen Rahmenteil 54 und einer hinteren Rahmenplatte 56 besteht, die am vorderen Rahmenteil 54 angeschraubt ist. Der vordere Rahmenteil 54 hat eine am Außenumfang umlaufende, im Querschnitt rechteckige Aussparung, die mit der aufgeschraubten Rahmenplatte 56 einen Führungsschlitz 58 bildet. In den beiden zueinander parallelen Führungsschlitzen 58 an den vertikalen Außenseiten des Rahmens 36 sind die beiden vertikalen Längsholme 60 eines Außenrahmens 62 höhenverschieblich gelagert, dessen unterer Rand als Druckschuh 38 ausgebildet ist. Zwischen den Druckschuh 38 und die diesem gegenüberliegende Querstrebe des vorderen Rahmenteils 54 ist wenigstens eine Druckfeder 64 eingesetzt, die dafür sorgt, daß der Druckschuh 38 elastisch federnd auf das Werkstück 18 drückt.

Der Rahmen 36 ist zwischen zwei vertikal angeordneten, in Längsrichtung des Armes 32 gegeneinander verschieblichen Führungsplatten 66, 68 höhenverstellbar gelagert. Hierzu haben die beiden Führungsplatten 66, 68 auf ihren einander gegenüberliegenden Seiten quadratisch Vorsprünge 70, 70', deren Abmessungen der Innenbreite des Rahmens 36 entsprechen, so daß dieser mit nur geringem Spiel nach oben und unten verschoben werden kann.

In die Führungsplatte 66 ist eine Gewindebuchse 40' fest eingeschraubt. Diese sitzt längsverschieblich, jedoch nicht drehbar auf dem Arm 32. Entsprechend dem Beispiel der Gewindebuchse 40 hat auch die Gewindebuchse 40' drei gleichmäßig über den Umfang verteilte, radiale Ausnehmungen 44, in die jeweils ein Keilelement 46 eingesetzt ist. Dessen Keilfläche stützt sich an der gegenüberliegenden, schrägen Führungsfläche 48 ab, die an der Führungsplatte 68 ausgearbeitet ist. Auf die Gewindebuchse 40' ist ein Klemmring 50' aufgeschraubt, welcher über eine Ringscheibe 52 in axialer Richtung gegen die Keilelemente 46 wirkt.

Wenn die Position des Druckschuhs 38 sowohl in Längsrichtung des Armes 32 als auch in der Höhe blockiert werden soll, wird der Klemmring 50' auf der Gewindebuchse 40' festgeschraubt, so daß er über die Ringscheibe 52 die drei Keilelemente 46 radial nach innen schiebt und gleichzeitig die beiden Führungsplatten 66 und 68 zusammenklemmt. Dabei wird der Rahmen 36 zwischen den Führungsplatten 66 und 68 eingeklemmt und gleichzeitig die Axialposition des Rahmens 36 und damit des Druckschuhs 38 auf dem Arm 32 festgelegt.

Zwischen die beiden Führungsplatten 66 und 68 ist eine Zugfeder 72 eingesetzt, die die beiden Führungsplatten 66 und 68 immer mit leichtem Zug zusammenzieht. Damit wird verhindert, daß bei gelöstem Klemmring 50' der Rahmen 36 und damit der Druckschuh 38 unbeabsichtigt nach unten fallen und dabei möglicherweise das rotierende Werkzeug beschädigen.

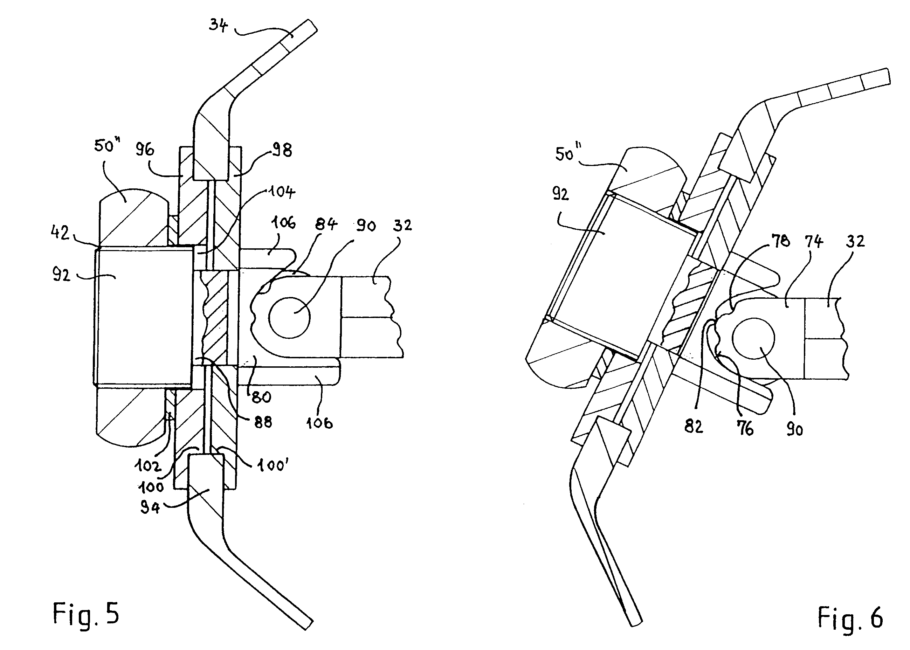

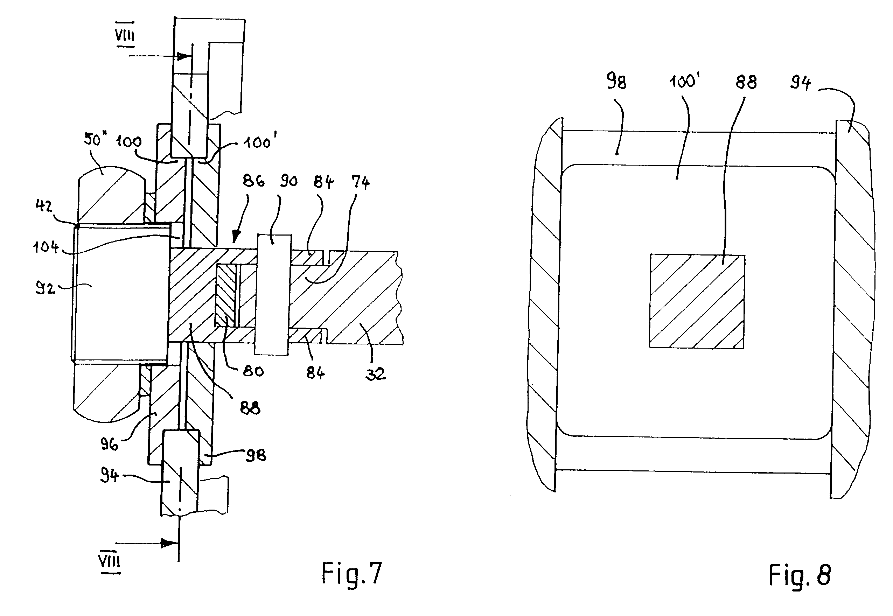

Aus den Figuren 5 bis 7 ergibt sich, daß das freie Ende 74 des Trägers 32 abgeflacht ist und eine kreisbogenförmige Stirnseite 76 hat, in die eine mittige und eine seitlich dazu angeordnete Rastausnehmung 78 eingearbeitet sind. An der kreisbogenförmigen Stirnseite 76 liegt ein etwa C-förmiges Rastelement 80 an, das eine mittige Rastnase 82 hat, die in die Rastausnehmungen 78 eingreifen kann.

Das Rastelement 80 ist zwischen zwei zueinander parallele, horizontale Schenkel 84 eines als Gabel 86 ausgebildeten Endes eines Zapfens 88 eingesetzt, der einen quadratischen Querschnitt hat und mit seinen beiden Schenkeln 84 mittels eines vertikalen Drehzapfens 90 schwenkbar auf dem abgeflachten Ende 74 des Armes 32 gelagert ist. Das von der Gabel 86 wegweisende Ende des Zapfens 88 ist als Gewindebolzen 92 mit Außengewinde 42 ausgebildet. Auf das Außengewinde 42 ist der Klemmring 50'' aufgeschraubt.

Das Führungsorgan 34 ist am unteren Ende eines rechteckigen Rahmens 94 ausgebildet, der zwischen zwei vertikalen Führungsplatten 96 und 98 höhenverstellbar gelagert ist. Ähnlich wie bei den beiden Führungsplatten 66 und 68 stehen auch von den beiden Führungsplatten 96 und 98 quadratische Vorsprünge 100 bzw. 100' ab, die einander gegenüberliegen und auf diese Weise eine Führung für den höhenverschieblichen Rahmen 94 bilden, der zwischen den beiden Führungsplatten 96 und 98 liegt. Die Führungsplatte 96 hat eine kreisförmige Bohrung 104, so daß sie über das Außengewinde 42 auf den Gewindebolzen 92 aufgesetzt werden kann, während die Führungsplatte 98 eine quadratische mittlere Öffnung hat, die auf dem Zapfen 88 mit quadratischem Querschnitt sitzt.

Wenn der Klemmring 50'' auf dem Gewindebolzen 92 festgezogen wird, drückt er über eine Ringscheibe 102 die Führungsplatte 96 gegen die Führungsplatte 98, welche sich an der dieser gegenüberliegenden Außenseite des Rastelementes 80 abstützt. Dabei wird der Rahmen 94 zwischen den beiden Führungsplatten 96 und 98 eingeklemmt und in seiner gewählten Höhenlage arretiert. Gleichzeitig drückt die Führungsplatte 98 das Rastelement 80 gegen die kreisbogenförmige Stirnseite 76 am freien Ende 74 des Trägers 32, so daß die Rastnase 82 entsprechend der Winkelstellung des Zapfens 88 in eine der beiden Rastausnehmungen 78 eingreift. Dadurch wird mittels des Klemmringes 50'' gleichzeitig die gewählte Winkelstellung des Führungsorgans 34 arretiert.

Das Rastelement 80 hat zu beiden Seiten hochgezogene Schultern 106, die die Schenkel 84 der Gabel 86 übergreifen; dadurch wird sichergestellt, daß das Rastelement 80 bei einer Schwenkung des Zapfens 88 um den Drehzapfen 90 mitgenommen wird.

Zur Höhenverstellung des Rahmens 94 mit dem Führungsorgan 34 genügt es, den Klemmring 50'' nur leicht zu lösen, so daß die Rastnase 82 in Eingriff mit der jeweiligen Rastausnehmung 78 bleibt und sich die Winkelstellung des Führungsorgans 34 nicht ändert.

## Patentansprüche

1. Andruckvorrichtung für Holzfräsmaschinen mit einem an einem Lagerbock (20) angebrachten, um eine horizontale Achse schwenkbaren Arm, der einen vertikal und horizontal verstellbaren, auf die Oberseite des Werkstücks (18) wirkenden Druckschuh (38) und ein das Werkstück (18) in horizontaler Richtung gegen einen Anschlag (16) drückendes, vertikal verstellbares Führungsorgan (34) trägt, das um eine vertikale Achse schwenkbar ist, dadurch gekennzeichnet, daß der Arm als eine Stange (32) ausgebildet ist, die in einem am Lagerbock (20) schwenkbar angelenkten Zylinder (26) längsverschieblich gelagert ist und auf die sowohl der Druckschuh (38) als auch das Führungsorgan (34) aufgesetzt sind, wobei zur Arretierung der in ihrer Längsrichtung eingestellten Stange (32) und/oder des in vertikaler und horizontaler Richtung eingestellten Druckschuhs (38) und/oder des in vertikaler Richtung eingestellten und geschwenkten Führungsorgans (34) jeweils ein auf ein Außengewinde (42) aufgeschraubter Klemmring (50, 50', 50'') vorgesehen ist, der koaxial auf der Stange (32) sitzt.

2. Andruckvorrichtung nach Anspruch 1, dadurch gekennzeichnet, daß der Druckschuh (38) und/oder das Führungsorgan (34) am unteren Ende eines rechteckigen Rahmens (36; 94) angebracht ist, der zwischen zwei vertikalen, in Längsrichtung der Stange (32) gegeneinander verschieblichen Führungsplatten (66, 68; 96, 98) höhenverstellbar gelagert ist.

3. Andruckvorrichtung nach Anspruch 2, dadurch gekennzeichnet, daß die beiden Führungsplatten (66, 68) zur Höhenarretierung des Rahmens (36) des Druckschuhs (38) durch wenigstens eine Zugfeder (72) mit leichtem Druck gegen den Rahmen (36) gedrückt werden.

4. Andruckvorrichtung nach einem der Ansprüche 1 bis 3, dadurch gekennzeichnet, daß für die Arretierung des Druckschuhs (38) in Längsrichtung der Stange (32) und/oder der Stange (32) in ihrer Längsrichtung Keilelemente (46) vorgesehen sind, die in radialen Ausnehmungen (44) einer auf die Stange (32) koaxial aufgesetzten, das Außengewinde (42) tragenden Gewindebuchsen (40, 40') eingesetzt und mittels des Klemmrings (50, 50', 50'') an jeweils einer schrägen Führungsfläche (48) radial gegen die Außenseite der Stange (32) verschiebbar sind.

5. Andruckvorrichtung nach Anspruch 4, dadurch gekennzeichnet, daß die Stange (32) einen Polygonquerschnitt hat und die Keilelemente (46) gleichmäßig auf dessen Umfang verteilt sind.

6. Andruckvorrichtung nach Anspruch 4 oder 5, dadurch gekennzeichnet, daß an dem vom Lagerbock (20) abgewandten Ende des Zylinders (26) die Gewindebuchse (40, 40') angebracht ist und die schrägen Führungsflächen (48) für die Keilelemente (46) ausgebildet sind.

7. Andruckvorrichtung nach Anspruch 4 oder 5, dadurch gekennzeichnet, daß von einer der beiden Führungsplatten (66) zur Höhenarretierung des Rahmens (36) des Druckschuhs (38) die Gewindebuchse (40') absteht und in eine mittlere Bohrung der gegenüberliegenden Führungsplatte (68) eingreift, an der die schrägen Führungsflächen (48) für die Keilelemente (46) ausgebildet sind.

8. Andruckvorrichtung nach Anspruch 7, dadurch gekennzeichnet, daß der Druckschuh (38) gegen eine Federkraft (Druckfeder 64) vertikal nach oben verschiebbar an dem Rahmen (36) gelagert ist.

9. Andruckvorrichtung nach Anspruch 8, dadurch gekennzeichnet, daß der Druckschuh (38) den unteren Rand eines Außenrahmens (62) bildet, dessen vertikale Längsholme (60) in Führungsschlitzen (58) höhenverschiebbar sind, die in die vertikalen Außenseiten des Rahmens (36) eingearbeitet sind.

10. Andruckvorrichtung nach einem der Ansprüche 2 bis 9, dadurch gekennzeichnet, daß die beiden Führungsplatten (96, 98) zur Höhenarretierung des Rahmens (94) des Führungsorganes (34) auf einen am freien Ende (74) der Stange (32) um eine vertikale Achse (Drehzapfen 90) schwenkbar angelenkten Zapfen (88) aufgesetzt sind, dessen freies Ende das Außengewinde (42) für den Klemmring (50'') trägt.

11. Andruckvorrichtung nach Anspruch 10, dadurch gekennzeichnet, daß der einen Rechteckquerschnitt aufweisende Zapfen (88) an seinem vom Außengewinde (42) abgewandten Ende als Gabel (86) ausgebildet ist, die auf das freie, abgeflachte Ende (74) der Stange (32) um den Drehzapfen (90) schwenkbar aufgesetzt ist, wobei das abgeflachte Ende (74) der Stange (32) eine kreisbogenförmige Stirnseite (76) mit Rastausnehmungen (78) hat, in die zur Arretierung der Winkeleinstellung des Rahmens (94) des Führungsorganes (34) ein in die Gabel (86) eingesetztes Rastelement (80) bei festgeschraubtem Klemmring (50'') eingreift.

## Claims

1. A pressure device for wood-cutting machines with an arm which is mounted on a bearing stand (20) and is pivotable about a horizontal axis and which supports a pressure shoe (38), displaceable vertically and horizontally and acting upon the top of the workpiece (18), and a vertically displaceable guide member (34), which presses the workpiece (18) in the horizontal direction against a stop (16) and which is pivotable about a vertical axis, **characterized in that** the arm is constructed in the form of a rod (32) which is mounted longitudinally displaceably in a cylinder (26) articulated to the bearing stand (20) and on which both the pressure shoe (38) and the guide member (34) are mounted, wherein one respective clamping ring (50, 50', 50'') which is screwed onto an external thread (42) and which is mounted coaxially on the rod (32) is provided in each case in order to lock the rod (32) set in its longitudinal direction and/or the pressure shoe (38) set in the vertical and horizontal directions and/or the guide member (34) set and pivoted in the vertical direction.

2. A pressure device according to Claim 1, **characterized in that** the pressure shoe (38) and/or the guide member (34) is attached to the lower end of a rectangular frame (36; 94) which is mounted so as to be vertically adjustable between two vertical guide plates (66, 68; 96, 98) displaceable towards each other in the longitudinal direction of the rod (32).

3. A pressure device according to Claim 2, **characterized in that** the two guide plates (66, 68) are pressed with slight pressure against the frame (36) of the pressure shoe (38) by at least one tension spring (72) in order to lock the frame (36) vertically.

4. A pressure device according to one of Claims 1 to 3, **characterized in that** wedge elements (46), which are inserted in radial recesses (44) in a threaded bush (40, 40') mounted coaxially on the rod (32) and carrying the external thread (42) and are radially displaceable against the outside of the rod (32) by means of the clamping ring (50, 50', 50'') on one respective oblique guide face (48) in each case, are provided in order to lock the pressure shoe (38) in the longitudinal direction of the rod (32) and/or the rod (32) in its longitudinal direction.

5. A pressure device according to Claim 4, **characterized in that** the rod (32) has a polygonal cross-section, and the wedge elements (46) are uniformly distributed on its periphery.

6. A pressure device according to Claim 4 or 5, **characterized in that** the threaded bush (40, 40') is attached to the end of the cylinder (26) remote from the bearing stand (20), and the oblique guide faces (48) for the wedge elements (46) are formed on the said end.

7. A pressure device according to Claim 4 or 5, **characterized in that** the threaded bush (40') projects from one of the two guide plates (66) for locking the frame (36) of the pressure shoe (38) vertically and it engages in a central bore in the guide plate (68) which is situated opposite [the first-mentioned guide plate (66)] and on which the oblique guide faces (48) for the wedge elements (46) are formed.

8. A pressure device according to Claim 7, **characterized in that** the pressure shoe (38) is mounted on the frame (36) so as to be displaceable vertically upwards against a spring force (compression spring 64).

9. A pressure device according to Claim 8, **characterized in that** the pressure shoe (38) forms the lower edge of an outer frame (62), the vertical longitudinal uprights (60) of which are vertically displaceable in guide slots (58) which are formed in the vertical outer sides of the frame (36).

10. A pressure device according to one of Claims 2 to 9, **characterized in that** the two guide plates (96, 98) for locking the frame (94) of the guide member (34) vertically are mounted on a pin (88), which is articulated to the free end (74) of the rod (32) so as to be pivotable about a vertical axis (pivot pin 90) and the free end of which carries the external thread (42) for the clamping ring (50'').

11. A pressure device according to Claim 10, **characterized in that** the pin (88) of rectangular cross-section is constructed at its end remote from the external thread (42) in the form of a fork (86) which is mounted on the free flattened end (74) of the rod (32) so as to be pivotable about the pivot pin (90), wherein the flattened end (74) of the rod (32) has a circular front end (76) with catch recesses (78) into which a catch element (80) inserted into the fork (86) engages when the clamping ring (50'') is screwed tight in order to lock the angular setting of the frame (94) of the guide member (34).

## Revendications

1. Dispositif de pression pour machines à fraiser le bois avec un bras mobile autour d'un axe horizontal et fixé sur un support (20), bras qui porte un sabot de compression (38) réglable dans le sens vertical et dans le sens horizontal et qui agit sur la face supérieure de la pièce à usiner (18) ainsi qu'un élément de guidage (34) réglable dans le sens vertical, pivotant autour d'un axe vertical, qui pousse la pièce à usiner (18) dans le sens horizontal contre une butée (16), caractérisé en ce que le bras se présente sous forme d'une tige (32) à déplacement longitudinal et supportée dans un vérin (26) fixé de façon mobile sur le support (20), tige sur laquelle sont rapportés le sabot de compression (38) ainsi que l'élément de guidage (34), dans lequel pour le blocage de la tige (32) réglable dans le sens longitudinal et/ou du sabot de compression (38) réglable dans le sens vertical et dans le sens horizontal et/ou de l'élément de guidage (34) réglable dans le sens vertical et en rotation, il est prévu un écrou de serrage (50, 50', 50'') vissé sur un filetage mâle (42) placé de façon coaxiale sur la tige (32).

2. Dispositif de pression selon la revendication 1, caractérisé en ce que le sabot de compression (38) et/ou l'élément de guidage (34) est fixé à l'extrémité inférieure d'un cadre rectangulaire (36 ; 94) qui est placé de façon réglable en hauteur entre deux plaques de guidage (66, 68 ; 96, 98) verticales déplaçables l'une contre l'autre dans le sens longitudinal de la tige (32).

3. Dispositif de pression selon la revendication 2, caractérisé en ce que les deux plaques de guidage (66, 68) sont poussées, pour le blocage en hauteur du cadre (36) du sabot de compression (38), par au moins un ressort de traction (72) avec une légère pression contre le cadre (36).

4. Dispositif de pression selon l'une des revendications 1 à 3, caractérisé en ce que pour le blocage du sabot de compression (38) dans le sens longitudinal de la tige (32) et/ou de la tige (32) dans son sens longitudinal il existe des cales (46) placées dans des creux radiaux (44) d'une douille taraudée (40, 40') positionnée de façon coaxiale sur la tige (32) et supportant le filetage mâle (42) et qui peuvent être déplacées chacune à l'aide de l'écrou de serrage (50, 50', 50'') sur une surface de guidage inclinée (48) de façon radiale vis-à-vis de la face externe de la tige (32).

5. Dispositif de pression selon la revendication 4, caractérisé en ce que la tige (32) présente une section polygonale et les cales (46) sont réparties de façon régulière sur sa circonférence.

6. Dispositif de pression selon la revendication 4 ou 5, caractérisé en ce que la douille taraudée (40, 40') est fixée à l'extrémité éloignée du vérin (26) par rapport au support (20) et les surfaces de guidage inclinées (48) présentent la forme adéquate pour les cales (46).

7. Dispositif de pression selon la revendication 4 ou 5, caractérisé en ce que sur une des deux plaques de guidage (66) destinées au blocage en hauteur du cadre (36) du sabot de compression (38) la douille taraudée (40') dépasse et attaque un alésage centré dans la plaque de guidage opposée (68) sur laquelle sont formées les surfaces de guidage inclinées (48) pour les cales (46).

8. Dispositif de pression selon la revendication 7, caractérisé en ce que le sabot de compression (38) est supporté sur le cadre (36) de façon verticalement déplaçable vers le haut contre un moyen de rappel élastique (ressort de compression 64).

9. Dispositif de pression selon la revendication 8, caractérisé en ce que le sabot de compression (38) forme le bord inférieur d'un cadre extérieur (62) dont les montants verticaux (60) sont déplaçables en hauteur à l'intérieur de rainures de guidage (58) intégrées dans les côtés extérieurs verticaux du cadre (36).

10. Dispositif de pression selon l'une des revendications 2 à 9, caractérisé en ce que les deux plaques de guidage (96, 98) pour le blocage en hauteur du cadre (94) de l'élément de guidage (34) sont posées sur un pivot orientable (88) autour d'un axe vertical (pivot 90) à l'extrémité libre (74) de la tige (32), l'extrémité libre du pivot orientable portant le filetage mâle (42) pour l'écrou de serrage (50'').

11. Dispositif de pression selon la revendication 10, caractérisé en ce que le pivot (88) présentant une section rectangulaire forme à son extrémité éloignée du filetage mâle (42) une fourche (86) posée sur l'extrémité libre plate (74) de la tige (32) et pivotant autour du pivot (90), l'extrémité plate (74) de la tige (32) présentant un côté frontal (76) en arc de cercle avec encoches (78) dans lesquelles attaque, pour le blocage de l'angle du cadre (94) de l'élément de guidage (34), un élément à crans (80) placé dans la fourche (86) quand l'anneau de serrage (50'') est serré.
